# EUROPÄISCHE PATENTANMELDUNG

(11) **EP 3 549 708 A1**
(43) Veröffentlichungstag der Anmeldung: **09.10.2019**
(21) Anmeldenummer: 18020386.1
(22) Anmeldetag: 14.08.2018
(51) Int. Cl.: B23K 11/00, B23K 9/04, B23K 26/342, B23K 37/00

(54) **HOMOGENE KÜHLUNG FÜR SCHWEISSVERFAHREN, INSBESONDERE WAAM**

(30) Priorität: 06.04.2018 DE 102018002815
(71) Anmelder: Linde Aktiengesellschaft, 80331 München (DE)
(72) Erfinder: Siewert, Erwan, 85283 Niederlauterbach (DE)

(57) **Zusammenfassung**

Die Erfindung betrifft ein Schweißverfahren zur Herstellung eines Bauteils (10) durch schichtweises Auftragen mehrerer aufeinander liegender Lagen (100) eines metallischen Werkstoffes, wobei eine Basis (10a) des Bauteils (10) in einem flüssigen Kühlmedium (6) angeordnet wird, so dass das Kühlmedium die Basis (6) kontaktiert und eine Oberfläche (10b) der Basis (6) oberhalb eines Kühlmediumpegels (3) angeordnet ist, wobei auf die Oberfläche (10b) eine erste Lage (100) des Werkstoffes durch Verschweißen des Werkstoffes mit der Oberfläche (10b) aufgetragen wird, und wobei eine jeweilige nachfolgende Lage (100) auf eine durch die zuvor aufgetragene Lage (100) gebildete momentane Bauteiloberfläche (10bb) durch Verschweißen des Werkstoffes mit der momentanen Bauteiloberfläche (10bb) aufgetragen wird, wobei beim Schweißen des Werkstoffes jeweils entstehende Wärme vom Kühlmedium (6) aufgenommen wird. Weiterhin betrifft die Erfindung eine Vorrichtung (1) zur Durchführung des Verfahrens.

## Beschreibung

Die Erfindung betrifft ein Schweißverfahren sowie eine Vorrichtung zur Durchführung eines Schweißverfahrens.

Beim WAAM (Wire arc additive manufacturing) wird mit etablierten Metallschutzgasschweißverfahren (MSG) schichtweise ein metallischer Werkstoff aufgetragen, sodass eine 3D Struktur entsteht.

Problematisch ist hierbei, dass sich das Bauteil über die Schweißzeit aufheizt, so dass es zu einer Veränderung der elektrischen und thermischen Bedingungen, zu einer Veränderung des Lagenaufbaus und zu Verformungen sowie zum Auftreten von Anlauffarben kommt.

Zudem kommt es zu einer unkontrollierten Veränderung der mechanisch technologischen Werkstoffeigenschaften, da durch jede weitere Lage die vorherigen Lagen eine thermische Beeinflussung erfahren.

Aus diesen Gründen sind derartige Verfahren technisch nur sehr schwierig zu beherrschen. Hierbei kommt insbesondere zum Tragen, dass die Ist-Geometrie von der geplanten Soll-Geometrie abweicht sowie weiterhin der geplante Lagenaufbau regelmäßig nicht eingehalten werden kann, so dass auch wichtige Randbedingungen für den jeweils verwendeten Schweißprozess gestört werden (z.B. Lichtbogenlänge, Stickout, TCP, etc.). Diesbezügliche Regelmaßnahmen moderner Stromquellen führen dabei häufig dazu, dass der Lagenaufbau noch unkontrollierter wird. Zudem wird die Produktivität der Technologie stark durch den Umstand eingeschränkt, dass nach jeder bzw. nach einer bestimmten Anzahl an Lagen Zwangspausen zum Abkühlen der Bauteile eingelegt werden müssen.

Es besteht daher die Notwendigkeit, die Wärmeabführung zu kontrollieren, so dass konstante Bedingungen geschaffen werden, die es erlauben, den Lagenaufbau der fertigen Struktur im Voraus zu planen.

Diese Aufgabe wird durch ein Verfahren mit den Merkmalen des Anspruchs 1 bzw. durch eine Vorrichtung mit den Merkmalen des Anspruchs 15 gelöst.

Bevorzugte Ausgestaltungen dieser Erfindungsaspekte sind in den entsprechenden Unteransprüchen angegeben und werden nachfolgend beschrieben.

Gemäß Anspruch 1 wird ein Schweißverfahren zur Herstellung eines Bauteils durch schichtweises Auftragen mehrerer aufeinander liegender Lagen eines metallischen Werkstoffes offenbart, wobei eine Basis des Bauteils in einem flüssigen Kühlmedium angeordnet wird, so dass das Kühlmedium die Basis kontaktiert und eine Oberfläche der Basis oberhalb eines Kühlmediumpegels angeordnet ist, also aus dem Kühlmedium heraussteht, wobei auf die Oberfläche der Basis eine erste Lage des Werkstoffes durch Verschweißen des Werkstoffes mit der Oberfläche der Basis aufgetragen wird, und wobei eine jeweilige nachfolgende Lage auf eine durch die zuvor aufgetragene Lage des Werkstoffes gebildete momentane Bauteiloberfläche durch Verschweißen des Werkstoffes mit dieser momentanen Bauteiloberfläche aufgetragen wird, wobei beim Schweißen des Werkstoffes jeweils entstehende Wärme vom Kühlmedium aufgenommen wird.

Durch das erfindungsgemäße Kühlen wird mit Vorteil das Bewahren der mechanisch technologischen Werkstoffeigenschaften ermöglicht. Weiterhin erlaubt die Erfindung eine Erhöhung der Produktionsgeschwindigkeiten, da keine Abkühlphasen zwischen den einzelnen Lagen notwendig sind. Des Weiteren wird eine Reduktion des thermischen Verzuges des Bauteiles auf ein Minimum möglich. Im Ergebnis werden somit ein vorhersagbarer Lagenaufbau erhalten sowie geringere Unebenheiten in der erzeugten 3D-Struktur. Ferner wird der Entstehung von Anlauffarben entgegengewirkt.

Gemäß einer bevorzugten Ausführungsform des erfindungsgemäßen Verfahrens ist vorgesehen, dass der Kühlmediumpegel variiert, insbesondere angehoben, wird und/oder dass das Bauteil im Kühlmedium abgesenkt wird, so dass ein Abstand zwischen dem Kühlmediumpegel und der jeweiligen momentanen Bauteiloberfläche in einem vordefinierten Bereich liegt, insbesondere konstant ist.

Hierbei ist gemäß einer Ausführungsform vorgesehen, dass der besagte Abstand in einem Bereich von 0,1 mm bis 50 mm liegt.

Das Kühlmedium kann gemäß einer Ausführungsform des erfindungsgemäßen Verfahrens Wasser aufweisen oder kann durch Wasser gebildet sein. Weiterhin kann das Kühlmedium die folgenden Stoffe aufweisen oder kann durch die folgenden Stoffe gebildet sein: ein Öl, insbesondere Hochtemperaturöle, tiefkalt verflüssigte Gase.

Bevorzugt wird gemäß einer Ausführungsform das flüssige Kühlmedium bei dem erfindungsgemäßen Verfahren in einem Behälter bereitgestellt, wobei es sich bei dem Behälter insbesondere um eine nach oben hin offene Wanne handelt.

Weiterhin ist gemäß einer Ausführungsform des erfindungsgemäßen Verfahrens vorgesehen, dass dem Kühlmedium während der Durchführung des Verfahrens Wärme entzogen wird. Das Kühlmedium kann hierzu aus dem Behälter abgezogen werden, in einer Kühleinrichtung gekühlt werden und wieder in den Behälter eingeleitet werden. Alternativ hierzu kann dem Kühlmedium im Behälter über einen im Behälter angeordneten Wärmetauscher Wärme entzogen werden.

Weiterhin ist gemäß einer Ausführungsform des erfindungsgemäßen Verfahrens vorgesehen, dass das Kühlmedium während der Durchführung des Verfahrens umgewälzt wird. Hierdurch kann eine gleichmäßige Temperaturverteilung im Kühlmedium sichergestellt werden und der Wärmeübergang verbessert werden.

Alternativ oder zusätzlich kann im Kühlmedium eine Strömung erzeugt werden, die auf eine momentane Schweißposition gerichtet ist, an der Werkstoff auf die momentane Bauteiloberfläche aufgetragen wird. Hierdurch wird der konvektive Wärmeübergang am Orte des eigentlichen Schweißprozesses verbessert. Die Stärke der Strömung kann gemäß einer Ausführungsform der Erfindung entsprechend variiert werden.

Weiterhin kann gemäß einer Ausführungsform des erfindungsgemäßen Verfahrens vorgesehen sein, dass eine Isttemperatur einer Lage gemessen wird, die gerade durch Auftragsschweißen erzeugt wird, wobei der Abstand des Kühlmediumpegels zur momentanen Bauteiloberfläche so geregelt wird, dass die Isttemperatur sich einer vordefinierten Solltemperatur annähert.

Dies ist vorteilhaft, da es z.B. beim Schweißen von Stahl wichtig sein kann, dass die t8/5 Zeit, das ist die Zeit in der die Schweißung von 800°C auf 500°C abkühlt, in einem bestimmten Bereich liegt. Für andere Materialien gibt es andere Temperaturen / Zeitregime die ggf. eingehalten werden sollen. Da bei dem erfindungsgemäßen Verfahren das Bauteil Schicht für Schicht bzw. lagenweise aufgebaut wird, ist es schwierig, diese Regime einzuhalten. Teilweise kann die Vorwärme hierbei genutzt werden.

Durch die Messung der besagten Isttemperatur (am Besten der gerade erstarrenden Lage) wird es möglich ggf. korrigierend einzugreifen. Wenn z.B. die gewünschte Solltemperatur nicht eingehalten wird, kann durch die oben genannte Anströmung (Kühlmedium pro Zeit oder auch Position) oder aber durch den Abstand des Kühlmediums zur der gerade geschweißten Lage/Schicht, die gewollte Solltemperatur eingestellt werden.

Weiterhin ist gemäß einer Ausführungsform des erfindungsgemäßen Verfahrens vorgesehen, dass das Kühlmedium (insbesondere mittels einer Kühleinrichtung, siehe auch oben) auf einer konstanten bzw. einstellbaren Temperatur gehalten wird.

Weiterhin ist gemäß einer Ausführungsform des erfindungsgemäßen Verfahrens vorgesehen, dass die Basis auf einer Positioniereinrichtung angeordnet ist, die zum Absenken des Bauteils bzw. der Basis im Kühlmedium konfiguriert ist und/oder zum räumlichen Ausrichten der Basis bzw. des Bauteils, insbesondere durch Neigen der Basis bzw. des Bauteils, wobei insbesondere die Positioniereinrichtung so gestaltet ist, dass die räumliche Lage der Basis bzw. des Bauteils in allen sechs räumlichen Freiheitsgraden (drei translatorische sowie drei rotatorische Freiheitsgrade) einstellbar ist.

Die Basis kann z.B. durch eine Metallplatte gebildet sein, auf der die erste Lage durch Aufragsschweißen (sowie die weiteren Lagen) aufgebracht wird. Die Metallplatte bzw. Basis schützt dabei die Positioniereinrichtung, auf der die Basis ruht.

Weiterhin kann bei dem erfindungsgemäßen Verfahren vorgesehen sein, dass die Positioniereinrichtung eine Tragstruktur, insbesondere eine Plattform, aufweist, auf der die Basis des Bauteils anordenbar ist, wobei an einer Unterseite der Plattform bzw. der Tragstruktur zum Kühlen des Bauteiles bzw. der Basis des Bauteils Wärmeleitbleche vorgesehen sind, die das Kühlmedium kontaktieren und die insbesondere eine Vergrößerung der Oberfläche und somit der Kühlwirkung bewirken.

Um die Basis bzw. das Bauteil im Raum ausrichten zu können (hinsichtlich der besagten sechs Freiheitsgrade) ist weiterhin gemäß einer Ausführungsform des erfindungsgemäßen Verfahrens vorgesehen, dass die Positioniereinrichtung einen Hexapoden aufweist. So kann z.B. die Plattform bzw. Tragstruktur auf dem Hexapoden befestigt sein.

Hierbei wird insbesondere gemäß einer Ausführungsform eine notwendige Bewegung des Hexapod bzw. der Plattform/Tragstruktur in den sechs Freiheitsgraden berechnet, so dass ein gleichbleibender Abstand der momentanen Bauteiloberfläche bzw. der Schweißposition zum Kühlmedium und / oder eine gleichmäßige Wärmeableitung hergestellt wird.

Dies ist insbesondere wichtig, um Überhänge zu erstellen. Hierbei besteht das Problem, dass durch die Schwerkraft die noch flüssige Struktur absackt. Durch das richtige Positionieren kann erreicht werden, dass sich die vorherige Struktur unterhalb der flüssigen Lage befindet und somit durch diese gestützt wird.

Gemäß einer Ausführungsform kann der Kühlmediumpegel auch angehoben werden, in dem die Plattform, auf der die Struktur aufgebaut wird, bzw. das Bauteil mit einer Einrichtung (z.B. in Form eines höhenverstellbaren Tischs) abgesenkt wird.

Weiterhin ist gemäß einer bevorzugten Ausführungsform des erfindungsgemäßen Verfahrens vorgesehen, dass der Werkstoff mittels eines der folgenden Schweißverfahren bzw. Auftragsschweißverfahren mit der Oberfläche der Basis bzw. mit der momentanen Bauteiloberfläche des herzustellenden Bauteils verschweißt wird: Metallschutzgasschweißen, Wolframinertgasschweißen, Plasmaschweißen, Laserschweißen, Hybridschweißen (d.h., eine Kombination aus Laserschweißen und einem weiteren Schweißverfahren, insbesondere MSG), Tandemschweißen (hierbei werden zwei elektrisch unabhängige Lichtbögen verwendet).

Der Werkstoff bzw. Schweißzusatz kann z.B. in fester Form als Draht zugeführt werden oder auch pulverförmig.

Weiterhin ist gemäß einer Ausführungsform des erfindungsgemäßen Verfahrens vorgesehen, dass eine momentane Höhe des Bauteils über dem Kühlmediumpegel gemessen wird und der Kühlmediumpegel derart geregelt wird, dass die Höhe einem vordefinierten Sollwert angenähert wird.

Gemäß einer Ausführungsform kann der Füllstand des Kühlmediums gemessen und geregelt werden. Alternativ kann sich die Füllstandshöhe des Kühlmediums auch über eine Position eines Ablaufes am Behälter einstellen.

Weiterhin kann gemäß einer Ausführungsform des erfindungsgemäßen Verfahrens vorgesehen sein, dass eine in das Kühlmedium (beim Schweißen einer Lage) abgeführte Energie gemessen wird und mit der in die Lage eingebrachten Energie verglichen wird, wobei im Falle einer Abweichung einer oder mehrere, insbesondere alle, der folgenden Parameter zum Angleichen der beiden Energien verändert werden: ein Volumenstrom einer Strömung des Kühlmediums (insbesondere der oben beschriebenen Strömung, die auf die momentane Schweißposition gerichtet ist), eine Eingangstemperatur des Kühlmediums beim Einleiten in den Behälter, ein Abstand zwischen der momentanen Bauteiloberfläche (insbesondere der aktuellen Schweißposition) und dem Kühlmediumpegel. Die eingebrachte Energie ergibt sich z.B. aus der Lichtbogenenergie, die das Produkt aus dem Schweißstrom und der Lichtbogenspannung ist, abzüglich eines Verlusts (z.B. über abgegebene Wärmestrahlung und einen Energieeintrag in eine Brennerkühlung). Die Wirkungsgrade sind für Schweißprozesse grundsätzlich bekannt. Daher lässt sich die in die geschweißte Lage eingebrachte Energie gut berechnen.

Ein weiterer Aspekt der vorliegenden Erfindung betrifft eine Vorrichtung zur Durchführung eines Schweißverfahrens mit den Merkmalen des Anspruchs 15, wobei die Vorrichtung insbesondere bei dem erfindungsgemäßen Verfahren verwendet wird.

Gemäß Anspruch 15 weist die erfindungsgemäße Vorrichtung zumindest auf:
- einen Behälter zum Aufnehmen eines flüssigen Kühlmediums,
- eine Plattform zum Tragen des herzustellenden Bauteils,
- eine Schweißeinrichtung zum Verschweißen eines Werkstoffs mit einer Bauteiloberfläche des herzustellenden Bauteils, und
- eine Einrichtung zum Einstellen eines Abstandes zwischen einer Bauteiloberfläche des Bauteiles und einem Kühlmediumpegel des im Behälter angeordneten Kühlmediums.

Weiterhin kann die erfindungsgemäße Vorrichtung gemäß einer Ausführungsform eine Positioniereinrichtung zur Positionierung eines Schweißbrenners der Schweißeinrichtung oder eine Positioniereinrichtung zur Positionierung des Bauteils aufweisen. Für den Fall, dass das Bauteil positioniert wird, kann nur die Plattform bzw. das Bauteil im Kühlbehälter oder der gesamte Kühlbehälter bewegt werden.

Gemäß einer Ausführungsform der erfindungsgemäßen Vorrichtung ist vorgesehen, dass die Vorrichtung dazu ausgebildet ist, den Kühlmediumpegel anzuheben und/oder das Bauteil im Kühlmedium abzusenken. Das Anheben des Kühlmediumpegels kann zum Beispiel durch zusätzliches Einleiten von Kühlmedium in den Behälter über ein (z.B. regelbares) Ventil erfolgen.

Weiterhin kann die erfindungsgemäße Vorrichtung zum Kühlen des Kühlmediums dazu ausgebildet sein, Kühlmedium aus dem Behälter abzuziehen, dieses in einer Kühleinrichtung der Vorrichtung zu kühlen und wieder in den Behälter einzuleiten. Alternativ hierzu kann die erfindungsgemäße Vorrichtung zum Kühlen des Kühlmediums einen im Behälter angeordneten Wärmetauscher aufweisen. Ferner kann das Kühlmedium immer wieder erneuert werden und warmes Kühlmedium abgeführt werden.

Weiterhin ist die erfindungsgemäße Vorrichtung gemäß einer Ausführungsform dazu ausgebildet, das Kühlmedium umzuwälzen. Hierdurch kann, wie oben bereits erwähnt, eine gleichmäßige Temperaturverteilung im Kühlmedium sichergestellt werden. Die erfindungsgemäße Vorrichtung kann zum Umwälzen des Kühlmediums z.B. zumindest eine rotierende Schraube, eine Turbine oder vergleichbare Einrichtungen aufweisen.

Weiterhin ist die erfindungsgemäße Vorrichtung gemäß einer Ausführungsform bevorzugt dazu ausgebildet, im Kühlmedium eine Strömung zu erzeugen, die auf eine momentane Schweißposition gerichtet ist, an der Werkstoff auf die momentane Bauteiloberfläche aufgetragen wird. Zur Erzeugung dieser Strömung können z.B. die zur Erzeugung der Umwälzung des Kühlmediums verwendbaren Mittel bzw. Einrichtungen verwendet werden.

Weiterhin kann die erfindungsgemäße Vorrichtung gemäß einer Ausführungsform der Erfindung dazu ausgebildet sein, die Isttemperatur einer Lage des Bauteils zu messen, die gerade aufgetragen wird, sowie den Abstand des Kühlmediumpegels zur momentanen Bauteiloberfläche so zu regeln, dass die Isttemperatur sich einer vordefinierten Referenztemperatur annähert.

Weiterhin kann die erfindungsgemäße Vorrichtung eine Kühleinrichtung aufweisen, die dazu ausgebildet ist, das im Behälter befindliche Kühlmedium auf einer konstanten bzw. einstellbaren Temperatur zu halten.

Weiterhin ist gemäß einer Ausführungsform der erfindungsgemäßen Vorrichtung vorgesehen, dass die besagte Einrichtung zur Einstellung des Abstands eine Positioniereinrichtung ist oder aufweist, die zum Tragen der Basis des Bauteils bzw. des Bauteils dient. Vorzugsweise ist die Positioniereinrichtung zum Absenken der Basis bzw. des Bauteils im Kühlmedium ausgebildet und/oder zum räumlichen Ausrichten der Basis bzw. des Bauteils, insbesondere hinsichtlich aller sechs räumlichen Freiheitsgrade.

Zum Tragen des Bauteils kann die Positioniereinrichtung eine Tragstruktur, insbesondere Plattform, aufweisen, auf der das Bauteil bzw. die Basis anordenbar ist, und an deren Unterseite zum besseren Kühlen des Bauteils insbesondere Wärmeleitbleche vorgesehen sein können, die das Kühlmedium kontaktieren (siehe auch oben).

Insbesondere kann die Positioniereinrichtung gemäß einer Ausführungsform einen Hexapoden aufweisen, der insbesondere dazu ausgebildet ist, die besagte Plattform/Tragstruktur zu positionieren, insbesondere so, dass die räumliche Lage der Plattform/Tragstruktur bzw. der darauf angeordneten Basis des Bauteils in allen sechs Freiheitsgraden veränderbar ist. Ein solcher Hexapod weist insbesondere sechs Arme mit variabler Länge auf, die jeweils mittels eines Aktuators einstellbar ist, wobei der jeweilige Arm insbesondere einerseits gelenkig mit der Plattform/Tragstruktur verbunden ist sowie andererseits mit einem Boden des Behälters bzw. mit einer Basisplatte des Hexapoden, die auf dem Boden des Behälters angeordnet sein kann bzw. dort festgelegt ist.

Gemäß einer weiteren Ausführungsform ist die erfindungsgemäße Vorrichtung dazu ausgebildet, eine notwendige Bewegung des Hexapoden bzw. der Tragstruktur (z.B. Plattform) in den sechs Freiheitsgraden zu berechnen, die einen gleichbleibenden Abstand der momentanen Bauteiloberfläche zum Kühlmedium und / oder eine gleichmäßige Wärmeableitung sicherstellt (siehe auch oben).

Weiterhin ist gemäß einer Ausführungsform der erfindungsgemäßen Vorrichtung vorgesehen, dass die Schweißeinrichtung dazu ausgebildet ist, den Werkstoff mittels eines der folgenden Auftragsschweißverfahren auf die momentane Bauteiloberfläche bzw. Basis aufzutragen: Metallschutzgasschweißen, Wolframinertgasschweißen, Plasmaschweißen, Laserschweißen, Hybridschweißen, Tandemschweißen.

Weiterhin weist die erfindungsgemäße Vorrichtung gemäß einer Ausführungsform einen Sensor zum Messen der Höhe des Bauteils über dem Kühlmediumpegel auf, wobei die erfindungsgemäße Vorrichtung gemäß einer Ausführungsform weiterhin dazu ausgebildet ist, mittels des Sensors eine momentane Höhe des Bauteils über dem Kühlmediumpegel (bzw. einen Abstand der momentanen Bauteiloberfläche zum Kühlmediumpegel zu messen und den Kühlmediumpegel derart zu regeln oder das Bauteil derart im Kühlmedium abzusenken, dass die Höhe bzw. der Abstand einem vordefinierten Sollwert angenähert wird.

Weiterhin ist die erfindungsgemäße Vorrichtung gemäß einer Ausführungsform dazu ausgebildet, eine in das Kühlmedium beim Schweißen einer Lage abgeführte Energie zu messen und mit der in die Lage eingebrachten Energie (siehe auch oben) zu vergleichen, wobei bei einer Abweichung einer oder mehrere, insbesondere alle, der folgenden Parameter zum Angleichen der beiden Energien verändert werden: ein Volumenstrom der besagten Strömung des Kühlmediums, eine Eingangstemperatur des Kühlmediums beim Einleiten in den Behälter, ein Abstand zwischen der momentanen Bauteiloberfläche, insbesondere der aktuellen Schweißposition, und dem Kühlmediumpegel.

Weitere Merkmale und Vorteile der vorliegenden Erfindung sollen bei den nachfolgenden Figurenbeschreibungen von Ausführungsbeispielen der Erfindung anhand der Figuren beschrieben werden. Es zeigen:
- Fig. 1: eine schematische Darstellung einer erfindungsgemäßen Vorrichtung bzw. eines erfindungsgemäßen Verfahrens; und
- Fig. 2: eine schematische Darstellung eines Hexapoden, der bei dem erfindungsgemäßen Verfahren zum Tragen des Bauteils verwendet werden kann.

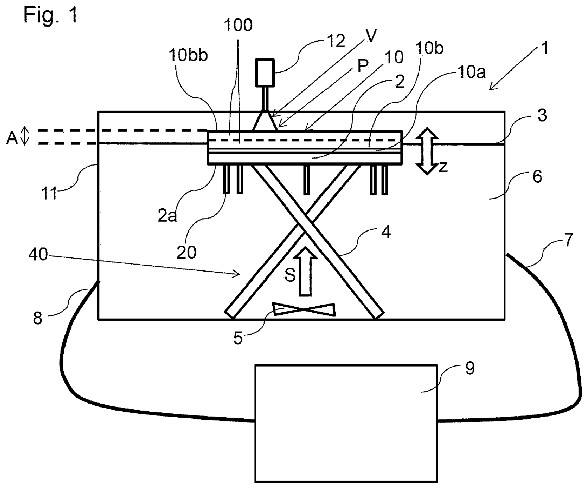

Die Erfindung betrifft gemäß Figur 1 ein Schweißverfahren bzw. eine Vorrichtung 1 zur Durchführung eines Schweißverfahrens. Die Vorrichtung 1 weist hierzu einen Behälter 11 auf, in den ein flüssiges Kühlmedium 6 einfüllbar ist, so dass das Kühlmedium 6 einen Kühlmediumpegel 3 ausbildet.

In dem Behälter 11 ist des Weiteren eine Tragstruktur, z.B. Form einer Plattform 2, zum Tragen des herzustellenden Bauteils 10 angeordnet. Weiterhin weist die Vorrichtung 1 eine Schweißeinrichtung 12 auf, die zum Verschweißen eines Werkstoffs mit einer Bauteiloberfläche 10bb des herzustellenden Bauteils 10 bzw. einer Oberfläche 10b einer Basis 10a (z.B. Metallplatte) des Bauteils 10 ausgebildet ist bzw. in den folgenden Lagen den Zusatzwerkstoff mit der vorherigen Lage verschweißt (dieses Auftragen von Lagen bzw. Schichten wird auch als Auftragsschweißen bezeichnet). Die Basis 10a stellt also den Anfangszustand des herzustellenden Bauteils 10 dar, auf die im Laufe des Verfahrens zusätzliche Lagen 100 des Werkstoffs aufgeschweißt werden. Die oberste Lage 100 bzw. Bauteiloberfläche 10bb, auf die jeweils die aktuelle Lage 100 geschweißt wird, wird auch als momentane Bauteiloberfläche 10bb bezeichnet. Schließlich weist die Vorrichtung 1 vorzugsweise auch eine Einrichtung 40 bzw. Positioniereinrichtung 40 (z.B. Hexapod 40) zum Einstellen eines Abstandes A zwischen einer bzw. der momentanen Bauteiloberfläche 10bb des Bauteiles 10 und dem Kühlmediumpegel 3 des im Behälter 11 angeordneten Kühlmediums 6 auf. Alternativ oder ergänzend hierzu kann auch der Kühlmediumpegel 3 eingestellt werden, indem zusätzliches Kühlmedium 6 in den Behälter 11 eingeleitet wird und der Kühlmediumpegel 3 somit der momentanen Bauteiloberfläche 10bb folgt (das Bauteil 10 wächst in der Höhe bzw. vertikal Lage um Lage an).

Weiterhin besteht gemäß einer Ausführungsform der Vorrichtung 1 zum Kühlen des Kühlmediums 6 die Möglichkeit, Kühlmedium 6 aus dem Behälter 11 abzuziehen (z.B. über eine Leitung 7), dieses in einer Kühleinrichtung 9 der Vorrichtung 1 zu kühlen und wieder in den Behälter einzuleiten (z.B. über eine Leitung 8). Alternativ oder ergänzend hierzu kann die erfindungsgemäße Vorrichtung 1 zum Kühlen des Kühlmediums 6 einen im Behälter 11 angeordneten Wärmetauscher aufweisen.

Zur Durchführung des Schweißverfahrens wird die Basis 10a des Bauteils 10 z.B. auf der in der Vertikalen z beweglichen sowie neigbaren Plattform 2 angeordnet und dort ggf. fixiert, wobei die Plattform 2 mit der Basis 10a in dem flüssigen Kühlmedium 6 angeordnet wird, so dass das Kühlmedium die Basis 10a kontaktiert und eine Oberfläche 10b der Basis 6 oberhalb des Kühlmediumpegels 3 angeordnet ist, wobei auf die Oberfläche 10b eine erste Lage 100 des Werkstoffes durch Verschweißen des Werkstoffes mit der Oberfläche 10b aufgetragen wird, und wobei eine jeweilige nachfolgende Lage 100 auf eine durch die zuvor aufgetragene Lage 100 gebildete momentane Bauteiloberfläche 10bb durch Verschweißen des Werkstoffes mit der momentanen Bauteiloberfläche 10bb aufgetragen wird, wobei beim Schweißen des Werkstoffes jeweils entstehende Wärme vom Kühlmedium 6 aufgenommen wird. Der Kühlmediumpegel 3 wird dabei so bezüglich der momentanen Bauteiloberfläche 10b eingestellt, dass ein Abstand zwischen Pegel 3 und momentaner Bauteiloberfläche 10b konstant ist bzw. in einem vorgegebenen Bereich liegt. Hierzu wird das Bauteil 10 entsprechend im Kühlmedium abgesenkt (z.B. jeweils nach Fertigstellung einer Lage 100) und/oder der Pegel 3 entsprechend angehoben, z.B. durch Einleiten von zusätzlichen Kühlmedium 6 in den Behälter 11.

Gemäß einer Ausführungsform der Erfindung bzw. Vorrichtung 1 ist auch denkbar, dass ein Schweißbrenner notwendige Bewegungen (x, y, z) ausführt. Das Bauteil 10 kann dabei komplett ruhen. Um jedoch auch Überhänge schweißen zu können, ist in diesem Fall vorgesehen, dass das Bauteil 10 zumindest kippbar gelagert ist.

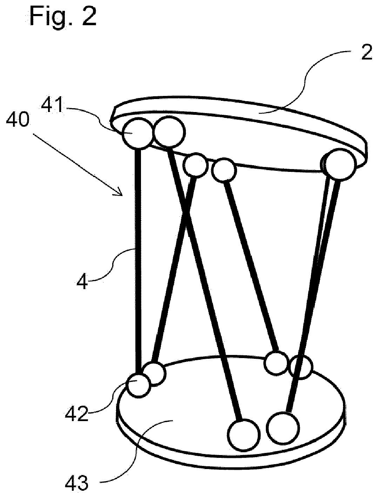

Damit das Bauteil 10 möglichst gut hinsichtlich des Pegels 3 ausrichtbar ist bzw. auch komplexe Geometrien auf einfache Weise schweißbar sind (insbesondere Überhänge), ist die Plattform 2 vorzugsweise auf einem Hexapoden 40 angebracht, der z.B. nach Figur 2 ausgebildet sein kann (die Plattform 2 kann auch in sonstiger Weise räumlich positionierbar sein). Der Hexapod 40 weist dabei sechs längenverstellbare Arme 4 auf, die z.B. durch Linearmotoren gebildet sein können. Jeder Arm 4 ist einerseits an einer Unterseite 2a der Plattform 2 über ein Gelenk 41 angelenkt sowie andererseits über ein Gelenk 42 an einer Bodenplatte 43 des Hexapoden 40 bzw. alternativ direkt an einem Boden des Behälters 11.

Weiterhin kann die erfindungsgemäße Vorrichtung 1 zur Verbesserung der Kühlung des Bauteiles 10 Wärmeleitbleche 20 an einer Unterseite 2a der Plattform aufweisen, wobei die Wärmeleitbleche 20 von der Unterseite 2a abragen und vom Kühlmedium 6 kontaktiert werden.

Zusätzlich kann die Vorrichtung 1 weiterhin eine Schraube 5 oder eine vergleichbare Vorrichtung zum Umwälzen des Kühlmediums 6 im Behälter 11 aufweisen. Mittels der Schraube 5 kann auch eine auf das Bauteil 10 gerichtete Strömung S erzeugt werden, die die Konvektion im Bereich des Bauteils 10 und damit dessen Kühlung verbessert. Weiterhin besteht alternative oder ergänzend auch die Möglichkeit, den gesamten Behälter 11 vertikal zu verfahren, um den Kühlmediumpegel 3 bezüglich des Bauteils 10 zu verändern. Das Bauteil 10 wird dann mit einer geeigneten Einrichtung gehalten.

**Bezugszeichenliste**

| | |
|---|---|
| 1 | Vorrichtung |
| 2 | Plattform |
| 2a | Unterseite der Plattform |
| 3 | Kühlmediumpegel |
| 4 | Arm Hexapod |
| 5 | Schraube |
| 6 | Kühlmedium |
| 7 | Leitung |
| 8 | Leitung |
| 9 | Kühleinrichtung |
| 10 | Herzustellendes Bauteil |
| 10a | Basis des Bauteils |
| 10b | Oberfläche der Basis |
| 10bb | Momentane Bauteiloberfläche |
| 11 | Behälter |
| 12 | Schweißeinrichtung |
| 20 | Wärmeleitblech |
| 40 | Hexapod |
| 41 | Gelenk |
| 42 | Gelenk |
| 43 | Basisplatte Hexapod (oder Boden Behälter 11) |
| s | Strömung |
| P | Schweißposition |
| V | Schweißverfahren |
| Z | Vertikale |

## Patentansprüche

1. Schweißverfahren zur Herstellung eines Bauteils (10) durch schichtweises Auftragen mehrerer aufeinander liegender Lagen (100) eines metallischen Werkstoffes, wobei eine Basis (10a) des Bauteils (10) in einem flüssigen Kühlmedium (6) angeordnet wird, so dass das Kühlmedium die Basis (6) kontaktiert und eine Oberfläche (10b) der Basis (6) oberhalb eines Kühlmediumpegels (3) angeordnet ist, wobei auf die Oberfläche (10b) eine erste Lage (100) des Werkstoffes durch Verschweißen des Werkstoffes mit der Oberfläche (10b) aufgetragen wird, und wobei eine jeweilige nachfolgende Lage (100) auf eine durch die zuvor aufgetragene Lage (100) gebildete momentane Bauteiloberfläche (10bb) durch Verschweißen des Werkstoffes mit der momentanen Bauteiloberfläche (10bb) aufgetragen wird, wobei beim Schweißen des Werkstoffes jeweils entstehende Wärme vom Kühlmedium (6) aufgenommen wird.

2. Schweißverfahren nach Anspruch 1, **dadurch gekennzeichnet, dass** der Kühlmediumpegel (3) relativ zum Bauteil (10) variiert wird und/oder dass das Bauteil (10) im Kühlmedium (6) abgesenkt wird, so dass ein Abstand (A) zwischen dem Kühlmediumpegel (3) und der jeweiligen momentanen Bauteiloberfläche (10bb) in einem vordefinierten Bereich liegt.

3. Schweißverfahren nach Anspruch 2, **dadurch gekennzeichnet, dass** der Abstand im Bereich von 0,1mm bis 50 mm liegt.

4. Schweißverfahren nach einem der vorhergehenden Ansprüche, **dadurch gekennzeichnet, dass** das Kühlmedium (6) in einem Behälter (11) angeordnet ist.

5. Schweißverfahren nach einem der vorhergehenden Ansprüche, **dadurch gekennzeichnet, dass** dem Kühlmedium (6) Wärme entzogen wird.

6. Schweißverfahren nach einem der vorhergehenden Ansprüche, **dadurch gekennzeichnet, dass** das Kühlmedium (6) umgewälzt wird.

7. Schweißverfahren nach einem der vorhergehenden Ansprüche, **dadurch gekennzeichnet, dass** im Kühlmedium (6) eine Strömung (S) erzeugt wird, die auf eine momentane Schweißposition (P) gerichtet ist, an der Werkstoff auf die momentane Bauteiloberfläche (10bb) aufgetragen wird.

8. Schweißverfahren nach einem der vorhergehenden Ansprüche, **dadurch gekennzeichnet, dass** eine Isttemperatur einer Lage des Bauteils (10) gemessen wird, die momentan aufgetragen wird, wobei der Abstand des Kühlmediumpegels (A) zur momentanen Bauteiloberfläche (10bb) so geregelt wird, dass die Isttemperatur sich einer vordefinierten Solltemperatur annähert.

9. Schweißverfahren nach einem der vorhergehenden Ansprüche, **dadurch gekennzeichnet, dass** das Kühlmedium (6) auf einer konstanten Temperatur gehalten wird.

10. Schweißverfahren nach einem der vorhergehenden Ansprüche, **dadurch gekennzeichnet, dass** die Basis (10a) auf einer Positioniereinrichtung (2) ruht, wobei insbesondere die Positioniereinrichtung zum Absenken des Bauteils (10) im Kühlmedium (6) und/oder zum räumlichen Ausrichten der Basis (10a) konfiguriert ist.

11. Schweißverfahren nach einem der vorhergehenden Ansprüche, **dadurch gekennzeichnet, dass** die Positioniereinrichtung (2) einen Hexapoden (40) aufweist.

12. Schweißverfahren nach einem der vorhergehenden Ansprüche, **dadurch gekennzeichnet, dass** der Werkstoff mittels eines der folgenden Verfahren (V) mit der Oberfläche (10b) der Basis (10a) oder mit der momentanen Bauteiloberfläche (10bb) verschweißt wird: Metallschutzgasschweißen, Wolframinertgasschweißen, Plasmaschweißen, Laserschweißen, Hybridschweißen, Tandemschweißen.

13. Schweißverfahren nach einem der vorhergehenden Ansprüche, **dadurch gekennzeichnet, dass** eine momentane Höhe (A) des Bauteils (10) über dem Kühlmediumpegel (3) gemessen wird und der Kühlmediumpegel (3) derart geregelt wird, dass die Höhe (A) einem vordefinierten Sollwert angenähert wird.

14. Schweißverfahren nach einem der vorhergehenden Ansprüche, **dadurch gekennzeichnet, dass** eine in das Kühlmedium (6) beim Schweißen einer Lage abgeführte Energie gemessen wird und mit einer in die Lage eingebrachten Energie verglichen wird, wobei im Falle einer Abweichung einer oder mehrere, insbesondere alle, der folgenden Parameter zum Angleichen der beiden Energien verändert werden: ein Volumenstrom einer Strömung (S) des Kühlmediums (6), eine Eingangstemperatur des Kühlmediums (6) beim Einleiten in den Behälter (11), ein Abstand (A) zwischen der momentanen Bauteiloberfläche (10bb) und dem Kühlmediumpegel (3).

15. Vorrichtung (1) zur Durchführung eines Schweißverfahrens (V), insbesondere nach einem der vorhergehenden Ansprüche, aufweisend:
- einen Behälter (11) zum Aufnehmen eines flüssigen Kühlmediums (6),
- eine Plattform (2) zum Tragen des herzustellenden Bauteils (10),
- eine Schweißeinrichtung (12) zum Verschweißen eines Werkstoffs mit einer Bauteiloberfläche (10bb) des herzustellenden Bauteils (10),
- eine Einrichtung (40) zum Einstellen eines Abstandes (A) zwischen einer Bauteiloberfläche (10bb) des Bauteiles und einem Kühlmediumpegel (3) des im Behälter (11) angeordneten Kühlmediums (6).
